(19)

Europäisches
Patentamt
European
Patent Office
Office européen
des brevets

(11)  **EP 3 308 238 B1**

(12)  # EUROPEAN PATENT SPECIFICATION

(45) Date of publication and mention
of the grant of the patent:
**01.05.2019 Bulletin 2019/18**

(21) Application number: **16728681.4**

(22) Date of filing: **12.06.2016**

(51) Int Cl.:
***G05D 23/19*** *(2006.01)*

(86) International application number:
**PCT/EP2016/063410**

(87) International publication number:
**WO 2016/202704 (22.12.2016 Gazette 2016/51)**

(54) **METHOD AND THERMOSTAT CONTROLLER FOR DETERMINING A TEMPERATURE SET POINT**

VERFAHREN UND THERMOSTATREGLER ZUR BESTIMMUNG EINES
TEMPERATURSOLLWERTS

PROCÉDÉ ET DISPOSITIF DE COMMANDE DE THERMOSTAT POUR DÉTERMINATION DE POINT
DE CONSIGNE DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2015 IN 1776DE2015
20.11.2015 GB 201520475**

(43) Date of publication of application:
**18.04.2018 Bulletin 2018/16**

(73) Proprietor: **Eaton Intelligent Power Limited
Dublin 4 (IE)**

(72) Inventors:
 • **KABRA, Siddharth
411014 Pune (IN)**

 • **MUSUNURI, Shravana Kumar
411014 Pune (IN)**
 • **THOKALA, Naveen Kumar
500013 Telangana (IN)**

(74) Representative: **Eaton IP Group
EMEA
c/o Eaton Industries Manufacturing GmbH
Route de la Longeraie 7
1110 Morges (CH)**

(56) References cited:
**WO-A1-89/12269      US-A- 5 170 935
US-A1- 2012 232 702**

EP 3 308 238 B1

**Description**

**Field of the invention**

The present invention relates to controlling thermostats as used in heating, ventilation and air conditioning (HVAC) systems. More, in particular, the present invention relates to a method for determining a temperature set point for a thermostat device and to a thermostat controller.

**Prior art**

Thermostat devices are used in general and more specifically in residential and/or commercial applications to control HVAC systems. Some thermostats operate based on user input for setting a temperature set point only, some thermostats are programmable and comprise a learning algorithm in order to efficiently control a heating or air conditions system. One such thermostat device is known from US2012232702A1.

**Summary of the invention**

The present invention seeks to provide an improved method for setting a thermostat in order to obtain energy savings with the associated HVAC equipment.

According to the present invention, a method according to the preamble defined above is provided, the method comprising

- receiving an initial temperature set point value,
- determining an optimal set of parameter values based on an iterative model by solving the iterative model until a Predicted Mean Vote parameter is equal to zero, using the initial temperature set point value and seed value ranges for the set of parameters, the set of parameters comprising a metabolic rate, a relative humidity, a relative air velocity and a clothing level,

characterized in that the method further comprises

- changing the temperature set point ($t_a$) in the iterative model while maintaining the set of parameter values constant until a Predicted Mean Vote parameter of the iterative model is at a predetermined comfort level value, and
- selecting the determined temperature set point as an actual temperature set point for the thermostat device.

Using the present invention embodiment, the actual temperature set point will be at a more efficient level in view of energy saving, i.e. lower temperature for heating, and a higher temperature for cooling.

In a further aspect, the present invention relates to a thermostat controller connectable to a thermostat, comprising an input element for receiving an initial temperature set point value, and a processing element connected to the input element, wherein the processing element is arranged to execute any one of the present invention method embodiments.

Even further embodiments are envisaged and described in the appended claims, as will also be apparent from the detailed description below.

**Short description of drawings**

The present invention will be discussed in more detail below, using a number of exemplary embodiments, with reference to the attached drawings, in which

    Fig. 1 shows a flow diagram of an embodiment of the present invention;
    Fig. 2 shows a block diagram of a thermostat controller according to an embodiment of the present invention;
    Fig. 3 shows a graph showing the relationship between a Predicted Mean Vote parameter and a predicted percentage of the dissatisfied parameter; and
    Fig. 4 shows a graph of an exemplary situation showing the relation between the setting of the PMV value or temperature set point and the potential energy savings.

**Detailed description of exemplary embodiments**

Recently, programmable thermostats are being used to increase the HVAC energy savings for home owners.

When the user programs the thermostat, usually intuition is used to change set points of the thermostat. However, a user is typically not aware of the impact of this set point change on the energy savings or on the personal comfort experienced. For example, a user who typically has a set point at 22°C, is not aware of the energy savings possible with a set point of 20°C (in case of heaters). In addition, the user does not know the level of comfort (or discomfort) with the 20°C set point instead of 22°C. Similar considerations apply to air conditioning use, where usually a too low set point is used for missing out possible energy savings.

Changing the thermostat set point can lead to energy savings, but the limit to which set point can be changed depends on the user comfort level. Without knowing the user comfort level, the opportunity to harvest the maximum energy savings is lost.

The problem solved by the present invention embodiments is to determine a comfort index which estimates the comfort level of the user for the corresponding set point, thereby guiding the user to a temperature set point that would optimize the user's comfort and energy savings.

The present invention embodiments use an iterative model which uses a large number of parameters as shown in the table below.

| Parameter | Description | Seed ranges |
|---|---|---|
| M | Metabolic rate, in watts per square meter (W/m$^2$) | 45-90 |
| W | Effective mechanical power, in watts per square meter (W/m$^2$) or in mets (1 met = 58.2W/m$^2$) | 0 |
| $R_H$ | Relative Humidity (%) | 30-60 |
| $t_a$ | Air temperature, in degrees Celsius (°C) | As set by the user |
| $t_r$ | Mean radiant temperature, in degrees Celsius (°C) | Same as $t_a$ |
| $V_{ar}$ | Relative air velocity, in meters per second (m/s) | 0.1-0.2 |
| CLO | Clothing Level (clo) | 0.5-1 |

This iterative model as such is known from the ANSI standard ASHRAE-55 (American Society of Heating, Refrigerating and Air-Conditioning Engineers, Inc., see also www.ashrae.org) and includes a wide variety of parameters which influence a person's comfort level inside a house. The Predicted Mean Vote (PMV) model uses heat balance principles to relate the six key parameters of the Table to the average response of people to the ASHRAE thermal sensation scale (ranging from +3, hot, to -3, cold), for general indoor applications. It is noted that similar standards and models may be applied for implementation of the iterative model (see e.g. ISO 7730 (2005))

In a first embodiment of the present invention, the method comprises receiving an initial temperature set point value (set by the user), and determining an optimal set of parameter values based on an iterative model by solving the iterative model until a Predicted Mean Vote parameter is equal to zero, using the initial temperature set point value and seed value ranges for the set of parameters, the set of parameters comprising a metabolic rate M, a relative humidity $R_H$, a relative air velocity $v_{ar}$ and a clothing level CLO. The method further comprises changing the temperature set point ($t_a$) in the iterative model while maintaining the set of parameter values constant until a Predicted Mean Vote parameter of the iterative model is at a predetermined comfort level value and selecting the determined temperature set point as an actual temperature set point for the thermostat device.

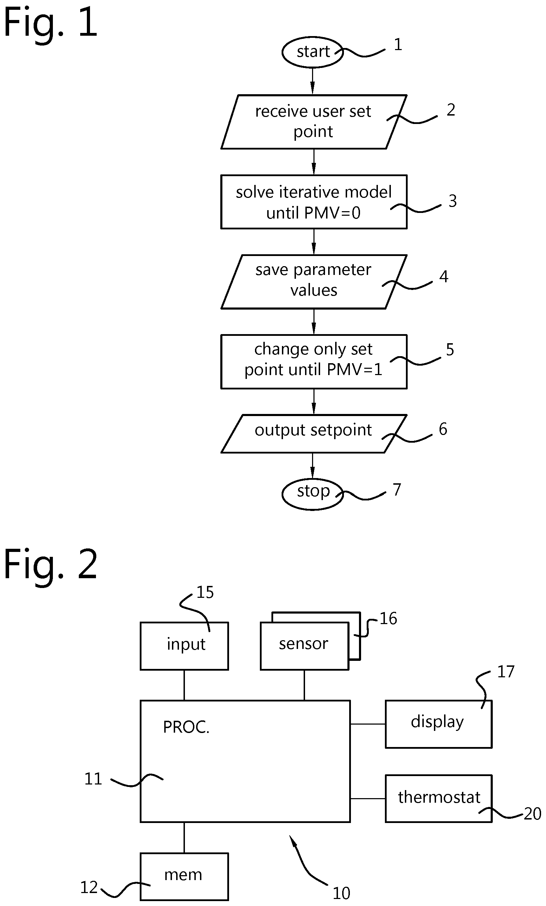

The flow diagram of this general embodiment is shown in Fig. 1. After the start, an initial user set point is received (block 2). Then, using seed values of the relevant parameters for the iterative model, the iterative model is solved until the Predicted Mean Vote parameter has the value zero, i.e. the set of circumstances which resembles the most comfortable thermal conditions for a user (block 3). The relevant parameter values thus found (for the parameters given in the table above) are saved, e.g. stored in a memory (block 4). In a subsequent step, only the single parameter $t_a$ (i.e. the temperature set point) is varied, and again the iterative model is solved, until the PMV parameter reaches a predetermined value, e.g. one (block 5). The temperature set point thus found is output as the actual temperature set point (block 6).

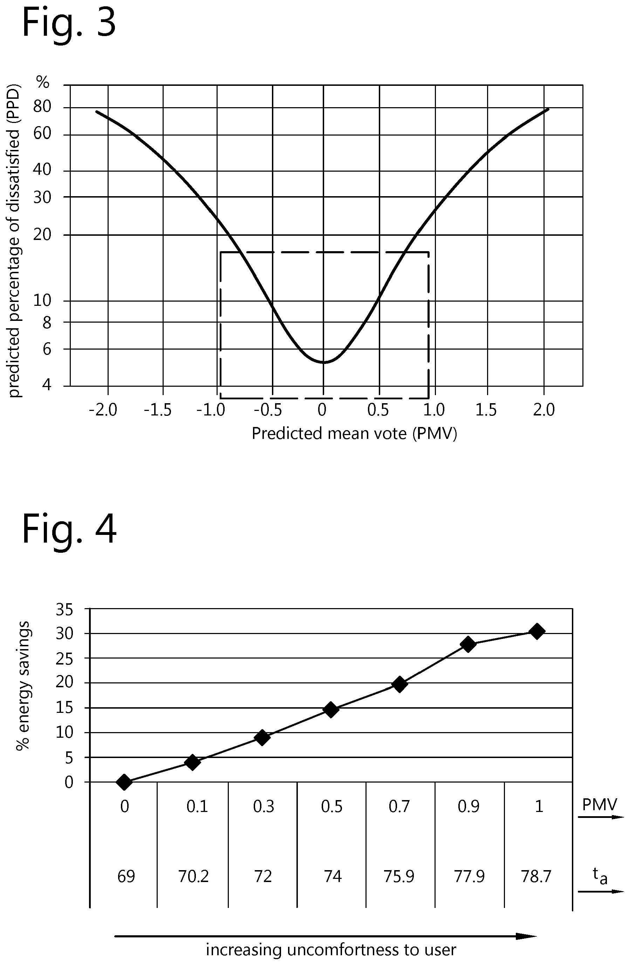

In Fig. 3 a graph is shown which relates the PMV parameter to a predicted percentage of dissatisfied (PPD), i.e. the relative amount of people which would no longer feel comfortable in those settings. In an embodiment of the present invention, the iterative model is based on the ASHRAE-55 standard. In accordance with the ASHRAE-55 standard, the PPD would be given as the formula

$$PPD = 100 - 95 \cdot \exp(-0.03353 \cdot PMV^4 - 0.2179 PMV^2)$$

A value of PMV=0 would indicate a situation where the highest percentage of people would be most comfortable. The PMV parameter can have both positive and negative values, wherein a positive value relates to improved efficiency for cooling, and a negative value relates to improved efficiency for heating.

In general, an absolute value of the predetermined comfort level value of 1.0 (i.e. PMV = 1 or -1) is acceptable (satisfied) to ~80% of the people.

It should be noted that if a particular user does not find the setting with PMV = 1 acceptable, the setting can be changed in subsequent iterations to PMV = 0.75, or 0.5 etc. until he finds it comfortable. Thus, in a further embodiment, the absolute value of the predetermined comfort level value is less than or equal to 0.75, e.g. equal to 0.5. Henceforth, that PMV value will be used as his general preference. The further method steps, however, remain the same.

In the ASHRAE-55 standard, a model is used which is e.g. described by the following four equations.

$$PMV = \left[0,303 \cdot \exp(-0,036 \cdot M) + 0,028\right] \cdot$$
$$\begin{cases} (M-W) - 3,05 \cdot 10^{-3} \cdot \left[5\,733 - 6,99 \cdot (M-W) - p_a\right] - 0,42 \cdot \left[(M-W) - 58,15\right] \\ -1,7 \cdot 10^{-5} \cdot M \cdot (5\,867 - p_a) - 0,0014 \cdot M \cdot (34 - t_a) \\ -3,96 \cdot 10^{-8} \cdot f_{cl} \cdot \left[(t_{cl} + 273)^4 - (\bar{t}_r + 273)^4\right] - f_{cl} \cdot h_c \cdot (t_{cl} - t_a) \end{cases} \quad (1)$$

$$t_{cl} = 35,7 - 0,028 \cdot (M-W) - I_{cl} \cdot \left\{3,96 \cdot 10^{-8} \cdot f_{cl} \cdot \left[(t_{cl} + 273)^4 - (\bar{t}_r + 273)^4\right] + f_{cl} \cdot h_c \cdot (t_{cl} - t_a)\right\} \quad (2)$$

$$h_c = \begin{cases} 2,38 \cdot |t_{cl} - t_a|^{0,25} & \text{for} \quad 2,38 \cdot |t_{cl} - t_a|^{0,25} > 12,1 \cdot \sqrt{v_{ar}} \\ 12,1 \cdot \sqrt{v_{ar}} & \text{for} \quad 2,38 \cdot |t_{cl} - t_a|^{0,25} < 12,1 \cdot \sqrt{v_{ar}} \end{cases} \quad (3)$$

$$f_{cl} = \begin{cases} 1,00 + 1,290\, l_{cl} & \text{for } l_{cl} \leqslant 0,078 \text{ m}^2 \cdot \text{K/W} \\ 1,05 + 0,645\, l_{cl} & \text{for } l_{cl} > 0,078 \text{ m}^2 \cdot \text{K/W} \end{cases} \quad (4)$$

In the above formulas, the index 'cl' indicates that it is a clothing related parameter. Furthermore, the clothing thermal insulation parameter $I_{cl}$ in formulas (2) and (4) is directly related to the parameter clo in the table according to $I_{cl}$=0.155*clo. Furthermore, in the formulas (1)-(4), the parameter $p_a$ is used (water vapour pressure) which is directly linked to the parameter $R_H$ (relative humidity) in the table, as is known to the person skilled in the art.

Iterations are applied using seed values as indicated above, in order to (first) find a solution where PMV=0, by solving the constrained non-linear equations (1)-(4). This can e.g. be implemented in Matlab or other numerical software programs using iterative solution techniques. In the next step of the present invention embodiments, the parameter values of the parameters in the table above are maintained at the values calculated to obtain PMV=0, and only the temperature set point parameter $t_a$ is varied in a similar manner, until the predetermined comfort level value reaches a higher value (e.g. PMV=1). The thus found setting still provides a high comfort level, however, significant energy savings can be obtained, as usually a lower set point temperature $t_a$ is found for heating circumstances, and a higher set point temperature $t_a$ for cooling circumstances.

The method may also be implemented in a thermostat controller 10 connectable to a thermostat 20, comprising an input element 15 for receiving an initial temperature set point value, and a processing element 11 connected to the input element 15. The processing element 11 is then arranged to execute the present invention method embodiments. A block diagram of such a thermostat controller 10 is shown in Fig. 2. The processing element 11 is furthermore connected to a memory unit 12 for storing executable instructions, and (intermediate) data. The input element 15 may be a regular temperature setting element (known from thermostats in general) or another type of input device, such as a keyboard or even voice input unit. To further aid in the interactive use, the processor element 11 may be connected to a display 17.

The processor element 11 may be implemented with a distributed computer system operating environment that provides an instant messaging capability. In a distributed computing environment, tasks may be performed by remote computer devices that are linked through communications networks. The distributed computing environment may include client and server devices that may communicate either locally or via one or more computer networks. Embodiments of the present invention may comprise special purpose and/or general purpose computer devices that each may include standard computer hardware such as a central processing unit (CPU) or other processing means for executing computer executable instructions, computer readable media for storing executable instructions, a display or other output means for displaying or outputting information, a keyboard or other input means for inputting information, and so forth. Examples of suitable computer devices include handheld devices, multiprocessor systems, microprocessor-based or programmable consumer electronics, networked PCs, minicomputers, mainframe computers, and the like.

The processing element 11 can be programmed to include the further functionality of the thermostat controller 10 or for the present invention method embodiments. In a further embodiment, a new actual temperature set point may be determined dynamically, e.g. at a fixed time interval. This would e.g. allow taking into account changing circumstances in the user's environment. This is e.g. implemented in an embodiment, wherein the method further comprises using a predicted parameter value for one or more of the parameters of the iterative model, e.g. an external temperature.

In an even further embodiment of the thermostat controller 10 as depicted in Fig. 2, one or more sensors 16 are provided which are connected to the processing element 11. This would allow implementation of a further method embodiment, wherein a measured parameter value is used for one or more of the parameters of the iterative model, e.g. relative humidity and/or relative air velocity.

Fig. 4 shows a graph of the energy savings that can be accomplished using the present invention embodiments, for a specific case of circumstances. In this case, the equations (1)-(4) were solved subsequently for increasing values of the predetermined comfort level value (PMV=0.1; 0.3; 0.5; 0.7; 0.9; 1), where at an initial temperate set point of 69°F (where PMV=0). It is shown that consequently higher values are found for the actual temperature set point $t_a$, resulting in substantial energy savings, up to 30% at PMV=1.

In an even further embodiment, the method further comprises calculating potential energy savings when using the determined temperature set point. These values (and new actual temperature set point) may be shown to a user, e.g. using display 17.

The invention may also be embodied in the general context of computer-executable instructions, such as program modules, that are executed by a processing device, including, but not limited to the personal computer. Generally, program modules include routines, programs, objects, components, data structure definitions, and instances, etc, that perform particular tasks or implement particular abstract data types. Typically the functionality of the program modules may be combined or distributed as desired in various environments. The invention can therefore also be embodied as a computer program product comprising machine readable instructions, which when loaded on a computing system connectable to a thermostat, allowing the computing system to execute the present invention method embodiments.

Embodiments also within the scope of the present invention include (non-transitory) computer readable media having executable instructions. Such computer readable media can be any available media that can be accessed by a general purpose or special purpose computer. By way of example, and not limitation, such computer readable media can comprise RAM, ROM, EEPROM, CD-ROM or other optical disk storage, magnetic disk storage or other magnetic storage devices, or any other medium which can be used to store the desired executable instructions and which can be accessed by a general purpose or special purpose computer. Combinations of the above should also be included within the scope of computer readable media. Executable instructions comprise for example, instructions and data which cause a general purpose computer, special purpose computer, or special purpose processing device to perform a certain function or group of functions,

The present invention embodiments have been described above with reference to a number of exemplary embodiments as shown in the drawings.

## Claims

1.  Method for determining a temperature set point for a thermostat device, the method comprising

    - receiving an initial temperature set point value,
    - determining an optimal set of parameter values based on an iterative model by solving the iterative model until a Predicted Mean Vote parameter is equal to zero, using the initial temperature set point value and seed value ranges for the set of parameters, the set of parameters comprising a metabolic rate, a relative humidity, a relative air velocity and a clothing level,

    **characterized in that** the method further comprises

    - changing the temperature set point ($t_a$) in the iterative model while maintaining the set of parameter values constant until a Predicted Mean Vote parameter of the iterative model is at a predetermined comfort level value, and
    - selecting the determined temperature set point as an actual temperature set point for the thermostat device.

2.  Method according to claim 1, wherein the iterative model is based on the ASHRAE-55 standard.

**3.** Method according to claim 1 or 2, wherein the absolute value of the predetermined comfort level value is 1.0.

**4.** Method according to claim 1 or 2, wherein the absolute value of the predetermined comfort level value is less than or equal to 0.75, e.g. equal to 0.5.

**5.** Method according to any one of claims 1-4,
further comprising determining a new actual temperature set point dynamically, e.g. at a fixed time interval.

**6.** Method according to any one of claims 1-5,
further comprising using a measured parameter value for one or more of the parameters of the iterative model, e.g. relative humidity and/or relative air velocity.

**7.** Method according to any one of claims 1-6,
further comprising using a predicted parameter value for one or more of the parameters of the iterative model, e.g. external temperature.

**8.** Method according to any one of claims 1-7,
further comprising calculating potential energy savings when using the determined temperature set point.

**9.** Thermostat controller connectable to a thermostat (20), comprising an input element (15) for receiving an initial temperature set point value, and a processing element (11) connected to the input element (15), wherein the processing element (11) is arranged to execute the method according to any one of claims 1-8.

**10.** Thermostat controller according to claim 9, further comprising one or more sensors (16) connected to the processing element (11).

**11.** Computer program product comprising machine readable instructions, which when loaded on a computing system connectable to a thermostat, allow the computing system to execute the method according to any one of claims 1-8.

**Patentansprüche**

**1.** Verfahren zum Bestimmen eines Temperatursollwerts für eine Thermostatvorrichtung, wobei das Verfahren umfasst

- Empfangen eines anfänglichen Temperatursollwerts,
- Bestimmen eines optimalen Satzes von Parameterwerten basierend auf einem iterativen Modell durch Lösen des iterativen Modells, bis ein Predicted-Mean-Vote-Parameter gleich Null ist, unter Verwendung des anfänglichen Temperatursollwerts und der Saatgutwertbereiche für den Satz von Parametern, wobei der Satz von Parametern eine Stoffwechsel rate, eine relative Luftfeuchtigkeit, eine relative Luftgeschwindigkeit und ein Kleidungsniveau umfasst,

**dadurch gekennzeichnet, dass** das Verfahren weiterhin umfasst

- Ändern des Temperatursollwerts ($t_a$) im iterativen Modell unter Konstantzhaltung des Satzes von Parameterwerten, bis ein Predicted-Mean-Vote-Parameter des iterativen Modells auf einem vorbestimmten Komfortniveau liegt, und
- Auswählen des bestimmten Temperatursollwerts als Ist-Temperatursollwert für die Thermostatvorrichtung.

**2.** Verfahren nach Anspruch 1, wobei das iterative Modell auf dem ASHRAE-55 Standard basiert.

**3.** Verfahren nach Anspruch 1 oder 2, wobei der Absolutwert des vorgegebenen Komfortniveauwerts 1,0 ist.

**4.** Verfahren nach Anspruch 1 oder 2, wobei der Absolutwert des vorgegebenen Komfortniveaus kleiner oder gleich 0,75, z.B. gleich 0,5 ist.

**5.** Verfahren nach einem der Ansprüche 1 bis 4, weiterhin umfassend das dynamische Bestimmen eines neuen Ist-Temperatursollwerts, z.B. in einem festen Zeitintervall.

**6.** Verfahren nach einem der Ansprüche 1 bis 5, weiterhin umfassend das Verwenden eines gemessenen Parameterwertes für einen oder mehrere der Parameter des iterativen Modells, z.B. relative Feuchtigkeit und/oder relative Luftgeschwindigkeit.

**7.** Verfahren nach einem der Ansprüche 1 bis 6, weiterhin umfassend das Verwenden eines vorhergesagten Parameterwertes für einen oder mehrere der Parameter des iterativen Modells, z.B. Außentemperatur.

**8.** Verfahren nach einem der Ansprüche 1 bis 7, weiterhin umfassend das Berechnen von potenziellen Energieeinsparungen bei Verwendung des bestimmten Temperatursollwerts.

**9.** Thermostatsteuerung, die mit einem Thermostat (20) verbindbar ist, umfassend ein Eingangselement (15) zum Empfangen eines anfänglichen Temperatursollwerts und ein mit dem Eingangselement (15) verbundenes Verarbeitungselement (11), wobei das Verarbeitungselement (11) eingerichtet ist, um das Verfahren nach einem der Ansprüche 1 bis 8 auszuführen.

**10.** Thermostatsteuerung nach Anspruch 9, weiterhin umfassend einen oder mehrere Sensoren (16), die mit dem Verarbeitungselement (11) verbunden sind.

**11.** Computerprogrammprodukt, umfassend maschinenlesbare Anweisungen, die, wenn sie auf ein mit einem Thermostat verbindbares Computersystem geladen werden, dem Computersystem ermöglichen, das Verfahren nach einem der Ansprüche 1 bis 8 auszuführen.

**Revendications**

**1.** Procédé de détermination d'un point de consigne de température pour un dispositif de thermostat, le procédé comprenant

- la réception d'une valeur de point de consigne de température initiale,
- la détermination d'un ensemble optimal de valeurs de paramètres sur la base d'un modèle itératif par la résolution du modèle itératif jusqu'à ce qu'un paramètre de vote moyen prédit soit égal à zéro, en utilisant la valeur de point de consigne de température initiale et des plages de valeurs de départ pour l'ensemble de paramètres, l'ensemble de paramètres comprenant un taux métabolique, une humidité relative, une vitesse d'air relative et un niveau d'habillement,

**caractérisé en ce que** le procédé comprend en outre

- le changement du point de consigne de température ($t_a$) dans le modèle itératif tout en maintenant l'ensemble de valeurs de paramètres constant jusqu'à ce qu'un paramètre de vote moyen prédit du modèle itératif soit à une valeur de niveau de confort prédéterminée, et
- la sélection du point de consigne de température déterminé en tant qu'un point de consigne de température réel pour le dispositif de thermostat.

**2.** Procédé selon la revendication 1, dans lequel le modèle itératif est basé sur la norme ASHRAE-55.

**3.** Procédé selon la revendication 1 ou 2, dans lequel la valeur absolue de la valeur de niveau de confort prédéterminée est 1,0.

**4.** Procédé selon la revendication 1 ou 2, dans lequel la valeur absolue de la valeur de niveau de confort prédéterminée est inférieure ou égale à 0,75, par exemple égale à 0,5.

**5.** Procédé selon l'une quelconque des revendications 1 à 4, comprenant en outre le fait de déterminer dynamiquement un nouveau point de consigne de température réel, par exemple à un intervalle de temps fixe.

**6.** Procédé selon l'une quelconque des revendications 1 à 5, comprenant en outre l'utilisation d'une valeur de paramètre mesurée pour un ou plusieurs des paramètres du modèle itératif, par exemple une humidité relative et/ou une vitesse d'air relative.

7. Procédé selon l'une quelconque des revendications 1 à 6,
comprenant en outre l'utilisation d'une valeur de paramètre prédite pour un ou plusieurs des paramètres du modèle itératif, par exemple une température externe.

8. Procédé selon l'une quelconque des revendications 1 à 7,
comprenant en outre le calcul d'économies d'énergie potentielles lors de l'utilisation du point de consigne de température déterminé.

9. Organe de commande de thermostat pouvant être relié à un thermostat (20), comprenant un élément d'entrée (15) pour la réception d'une valeur de point de consigne de température initiale, et un élément de traitement (11) relié à l'élément d'entrée (15), dans lequel l'élément de traitement (11) est agencé pour exécuter le procédé selon l'une quelconque des revendications 1 à 8.

10. Organe de commande de thermostat selon la revendication 9, comprenant en outre un ou plusieurs capteurs (16) reliés à l'élément de traitement (11).

11. Produit de programme informatique comprenant des instructions lisibles par machine qui, lorsqu'elles sont chargées sur un système informatique pouvant être relié à un thermostat, permettent au système informatique d'exécuter le procédé selon l'une quelconque des revendications 1 à 8.

# Fig. 1

start — 1

receive user set point — 2

solve iterative model until PMV=0 — 3

save parameter values — 4

change only set point until PMV=1 — 5

output setpoint — 6

stop — 7

# Fig. 2

15

input

16

sensor

17

display

PROC.

11

12 — mem

thermostat — 20

10

# Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2012232702 A1